# EUROPEAN PATENT SPECIFICATION

(11) **EP 1 987 108 B1**
(45) Date of publication and mention of the grant of the patent: **16.09.2009**
(21) Application number: 07703433.8
(22) Date of filing: 13.02.2007
(51) Int. Cl.: C09J 5/00, C08G 18/00, C09K 3/00

(54) **ONE-COMPONENT, WATER-FREE COATING COMPOSITION FOR SEALING BUILT STRUCTURES AND FLAT ROOFS**
EINKOMPONENTIGE WASSERFREIE BESCHICHTUNGSZUSAMMENSETZUNG ZUM ABDICHTEN VON BAUTEN UND FLACHDÄCHERN
COMPOSITION DE REVETEMENT A COMPOSANT UNIQUE, SANS EAU, POUR ETANCHEISER DES STRUCTURES CONSTRUITES ET DES TOITS PLATS

(30) Priority: 14.02.2006 DE 102006006974; 14.02.2006 DE 102006006973
(43) Date of publication of application: 05.11.2008
(73) Proprietor: BOSTIK SA, 92400 Courbevoie (FR)
(72) Inventor: DEIKE, Hans-Detlef, 49196 Bad Laer (DE)
(74) Representative: Granet, Pierre
(86) International application number: PCT/EP2007/001236
(87) International publication number: WO 2007/093382

(56) References cited:
- DE-A1- 19 849 817

## Description

The present invention relates to a one-component, water-free coating composition for sealing built structures and flat roofs, based on MS polymers, which is composed of a mixture of silane-terminated polyoxyalkylenes, preferably methoxy-alkyl-silane-terminated polyoxypropylenes of different viscosities, and of chalk powder, drying agent, curing catalysts, adhesion promoters and, if desired, further additives. The atmospheric-moisture-curing coating composition obtained is notable for flow resistance, high elasticity, insensitivity to weathering, low shrinkage, and good overcoatability; not only vertical but also horizontal faces, and also transitions between different roof sections, can be sealed.

In the construction industry it is necessary to seal off built structures, flat roofs and/or structural components made from mineral or organic building materials against the penetration of water; particularly important in this context is the sealing of joints or of cracks. In order to meet these requirements, permanently plastic or viscoelastic coatings have for many years been applied to flat roofs at the time of their installation or in the event of necessary repair works.

In accordance with the prior art it is possible to use different sealing materials:

From the beginning of the past century, bitumen sheets have been used. This technology, however, is now used only rarely, since sealing at corners, edges and apertures is not easy and in spite of judicious working it is easy for leaks to arise at these points.

Although working with hot liquid bitumen or polymeric mixtures does allow these problems to be avoided, the craftspersons carrying out the coating jobs are exposed to considerable toxic emissions. Similar difficulties are caused by solvent-containing bitumen mixtures and synthetic-resin mixtures, which is why solvent-containing sealants are hardly employed any more. Polyurethane-based coating compositions, in one- or two-component form, can be formulated without organic solvents, but contain highly toxic isocyanate compounds, which makes application very much more difficult.

The conditions are more favourable in the-context of the brush or spray application of aqueous polymer dispersions or polymer emulsions. These sealing materials, however, dry with sufficient rapidity only at ambient temperatures greater than 15°C. At drying temperatures above 20°C, on the other hand, water is easily enclosed, which can lead to blistering and leakage points. Moreover, the stability of the aqueous coating compositions is poor, and means that two or more coatings must be applied over one another in order to achieve sufficient layer thicknesses and hence sufficient protection against penetrating moisture.

One-component silicone-based coating compositions cure under the influence of atmospheric humidity. The best-known systems are the acetate systems, which emit acetic acid on curing. A disadvantage with these systems is the inadequate adhesion to many construction materials, and also the poor overcoatability. Moreover, the weathering stability in the case of outdoor applications commonly fails to meet the requirements which are imposed in central Europe.

Against this background as long ago as about 25 years hybrid polymers were developed, composed of typical scaffold polymers, such as polypropylene oxide, for example, and silanes. The silane groups here carry predominantly methoxy groups, from which, as a result of atmospheric humidity, methanol is released during the curing process. The silanol groups formed then react further, with crosslinking.

These hybrid polymers or, more accurately, prepolymers, are marketed by the industry under the name MS polymers (modified silane polymers). G. Habenicht gives an overview of this technology in the book "Kleben", Springer Verlag, 3rd edition, Berlin, 1997.

In this context, however, a number of patents will be additionally cited as prior art:

EP 0 824 574 proposes the use of a two-component sealant based on silane-terminated polyether prepolymers, the second component serving as a crosslinker for the prepolymers. The system has not become established, however, owing to the high level of cost and complexity.

EP 0 442 380 discloses a contact adhesive which is composed of silane-terminated polyoxyalkylenes, and a method of adhesively bonding adherends. Its suitability as a coating composition for sealing built structures, however, is not apparent from this application.

From EP 0 342 411 it is known that special stabilizers, such as monomeric isocyanates, for example, are to be added to the MS polymers in order to raise the flow resistance of the sealing compounds to a level which is useful in practice. On account of the high toxicity of these compounds, however, the proposal has not been pursued in the art.

To date, however, the pure MS polymers have been unable to establish themselves as coating compositions for sealing built structures, in spite of their fundamentally advantageous properties. Seen overall, the reasons for this failure lay in the difficulty of application, since with pure MS polymers it is only possible to build up very small film thicknesses. Greater film thicknesses, such as those required for surface seals, joint sealing or crack sealing, for example, delivered unsatisfactory results, since the MS polymers cured too slowly or the flow resistance on vertical or inclined surfaces was inadequate for obtaining uniformly watertight coatings.

It is therefore an object of the present invention to provide a formulation for a one-component, solvent-free and water-free, permanently elastic coating composition for sealing built structures and/or flat roofs, based on MS polymers, which, although it can be formulated so as to be self-levelling, at the same time also has sufficient flow resistance in order to allow it to be used to seal inclined and/or vertical surfaces.

This object is achieved by a one-component, water-free coating composition, based on MS polymers, **characterized in that** it is composed of a mixture of silane-terminated polyoxyalkylenes of different viscosities of together 20% to 50% by mass, 30% to 70% by mass of chalk powder, 0.5% to 5% by mass of drying agents, 0.1% to 5% by mass of curing catalysts, 0.2% to 5% by mass of adhesion promoter and, if desired, pigments, plasticizers, fillers, light stabilizers and heat stabilizers of together 0% to 20% by mass.

The coating composition of the invention for sealing built structures adheres very well to all typical building and/or roofing materials, such as for example concrete, wood, plastics, metals, woven glass fibre materials and roofing felts, thereby obviating pretreatment with a primer. The shrinkage, moreover, is very low, and blistering does not occur. Overcoatability with both solvent-containing and water-containing coating materials is very good, in contrast to that of pure silicones. Furthermore, the coating composition claimed can be applied even to wet substrates. Permanent elasticity over a period of several years is provided. The precise duration of elasticity depends, of course, on the ambient conditions prevailing, such as humidity, pH, temperature and mechanical loading.

The coating composition cures through a cycle of hydrolysis reactions and condensation reactions of the silane groups. The trigger for these reactions is the atmospheric humidity. With elimination of small amounts of methanol from the methoxy groups, an elastic and insoluble network is formed. The reaction rate can be controlled by addition of curing catalysts.

One advantageous embodiment of the invention is a one-component, water-free coating composition based on MS polymers, **characterized in that** it comprises as silane-terminated polyoxyalkylenes methoxy-alkyl-silane-terminated polyoxypropylene products having viscosities of 0.1 to 1.0 Pa·s, 5 to 10 Pa·s, 10 to 15 Pa·s and/or 15 to 25 Pa·s (measured at 20°C and a shear rate of 10 s⁻¹). As a result of this combination of the two types of MS polymers and the remaining constituents of the preparation it is possible to tailor the flow behaviour of the claimed coating composition between highly mobile to highly viscous.

According to a preferred embodiment of the invention, the silane-terminated polyoxyalkylenes employed comprise two methoxy-alkyl-silane-terminated polyoxypropylenes having a viscosity of 5 to 10 Pa·s and/or 10 to 15 Pa·s (measured at 20°C and a shear rate of 10 s⁻¹) in a mass ratio of 10:1 to 1:5.

The use of silane-terminated polyoxypropylenes of different viscosities makes it possible to tailor the viscosity of the coating composition claimed. The viscosity of the silane-modified polyoxypropylene prepolymers is determined by the molar masses and/or molar-mass distribution of the MS polyoxypropylenes. From a practical viewpoint the number-average molar mass of the silane-terminated polyoxypropylene prepolymers employed, i.e. prior to hydrolytic elimination of the methoxy groups, ought to vary between about 1000 and about 30 000 g/mol. In this context a viscosity of about 7 Pa·s corresponds to a number-average molar mass of about 10 000 g/mol, and a viscosity of 15 Pa·s corresponds to a number-average molar mass of about 25 000 g/mol.

An inventively prepared coating composition such as defined previously, using the stated silane-terminated polyoxypropylenes having a · viscosity of 5 or 15 Pa·s with a mass mixing ratio of 5 to 1, without addition of chalk, produces a product having a viscosity of 7 Pa·s (20°C, 10 s⁻¹).

According to another preferred embodiment, the one-component, solvent-free and water-free coating composition comprises 20% to 70% by mass of chalk powder hydrophobized with stearate. The chalk materials used are hydrophobized with typical stearates, such as calcium stearate, or else with stearic acid. The stearate content ought not to exceed 3%.

The addition of chalk has the function, generally speaking, of tailoring the physical and mechanical properties of the sealing compositions claimed to the specific application, as far as possible. The bond strengths, especially, are favourably influenced through the addition of chalk. At the same time it is possible to lower the viscosity to the desired level.

The particle size of the chalk powders employed can range within a broad spectrum, as a function of the target film thicknesses. For the purposes of the present invention, however, preference is given to using chalk powders with particle sizes of less than 20 µm and most preferably less than 10 µm.

Since on exposure to moisture the methoxy groups of the silane-terminated prepolymers undergo hydrolysis and crosslinking, it is necessary when producing the coating compositions claimed to add a drying agent with the function of a water scavenger. This makes it possible to ensure that the adhesives and sealants can be stored. Particularly suitable for this function is vinyltrimethoxysilane. As a result of the electronic structure of that compound, the methoxy groups hydrolyse very much more rapidly than the methoxy groups of the MS polymers employed. Only when the drying agent has been largely consumed are the MS polymers crosslinked. The amounts of vinyltrimethoxysilane added are guided by the water content of the ingredients; in practice, they are generally around 1% by mass.

In order to improve the adhesive properties of the coating composition on surfaces it is possible in addition to add adhesion promoters, especially silane-based adhesion promoters. Additions of 0.2% to 5% by mass of aminopropyltrimethoxysilane or aminoethyl-aminopropyl-trimethoxysilane have proved to be sensible.

In order to accelerate the curing of the coating composition of the invention following application, silanol condensation catalysts (curing catalysts) are added at the production stage. Those which have proven to be suitable include carboxylates and chelates of tin, of titanium and of aluminium. Particularly suitable is dibutyltin diacetylacetonate. The mass fraction of the catalyst is 0.1% to 5% by mass, preferably 1% to 2% by mass.

In addition it is possible for the coating composition claimed to comprise customary auxiliaries, such as, in particular, colour pigments, plasticizers, light stabilizers and fillers in a total of 0% to 20% by mass. Examples of suitable colour pigments are titanium dioxide, iron oxide, carbon black or organic colour pigments.

For plasticization it is possible to have recourse to established compounds. Mention might be made here primarily of the known phthalic esters, cyclohexanedicarboxylic esters or polypropylene oxide.

In addition it is possible to improve the light stability of the coating composition by means of light stabilizers. Especially suitable for this purpose are the compounds known as HALS compounds (sterically hindered light stabilizers), such as bis(2,2,6,6-tetramethyl-4-piperidyl) sebacate or compounds from the group of the benzotriazoles, such as 2,4-di-tert-butyl-6-(5-chlorobenzotriazol-2-yl)phenol, for example.

Other possible additions which may be of benefit in specific cases are finely divided fillers, coated or uncoated. Examples that may be cited here include the following: dolomite, talc, mica and heavy spar.

The production of the coating composition of the invention takes place in batchwise-operated vacuum mixers. The liquid silane-terminated polymer components (MS polymers) are weighed out and charged to the mixer; then, if desired, plasticizer, pigments and light stabilizers are added. These ingredients are carefully mixed and then the solid components, principally chalk powder, are incorporated with strong shearing under a simultaneously applied weak vacuum (approximately 100 mbar).

After the cooling of the batch to approximately 50°C or below, the drying agent is incorporated. After that the curing catalysts can be added and mixed in. Since after admission of air it is possible for gas bubbles to have formed in the batch, degassing is carried out briefly again.

The one-component,'solvent-free and water-free coating composition for sealing built structures or flat roofs that is accessible in this way finds application in the technoindustrial sector, in craft and among DIYers. The coating composition can be applied by brush, roller, coating knife or commercial spraying equipment. It adheres to all customary industrial building materials, such as metals, roofing felts, woven fibre materials, plastics, glass, ceramic and mineral construction materials. Owing to the variably adjustable viscosities it can be applied to vertical and horizontal surfaces. As a general rule, moreover, priming of the substrate is unnecessary.

The coating composition claimed is especially suitable for sealing built structures and/or flat roofs both when installing roof constructions and for necessary repair works on flat roofs. Mention may be made in particular of the sealing of flat roofs with embedding of glass fibre mesh fabrics in areas at risk of cracking; further examples are the sealing of chimney junctions, domed roof lights, and critical edge and corner regions of flat roofs. In addition the coating compositions described are also suitable for protecting foundations, balconies, patios, screeds or flags against moisture invasion. Another large field of application is the sealing of joints of all kinds. Examples that may be mentioned include the expansion joints and movement joints on flat roofs, or transition joints on built-structure seals.

The coating composition of the invention is a one-component system, containing no organic solvents, no bitumen and no water either. The drying time for a layer 1.5 mm thick is approximately 24 hours at 20°C and 60% relative humidity. Two or more layers can be applied atop one another without problems. The contraction on curing is minimal, and the composition can be overcoated with either aqueous dispersion coating materials or solvent-containing coating materials. The seals are durably elastic and also stable to light.

### Examples:

### Example 1:

10 kg of polyoxypropylene, dimethoxy-methyl-silane-terminated and with a viscosity of 1 Pa·s, and 15 kg of polyoxypropylene, dimethoxy-methyl-silane-terminated and with a viscosity of about 10 Pa·s (all values at 20°C and 10 s⁻¹), 15 kg of diisodecyl phthalate, 1 kg of titanium dioxide pigment and 0.25 kg of bis(2,2,6,6-tetramethyl-4-piperidyl) sebacate are charged to an evacuable planetary mixer and these ingredients are carefully homogenized under atmospheric pressure. Thereafter 50 kg of hydrophobized chalk powder with a particle size of 90% by mass < 10 µm are mixed in at 50 mbar vacuum.

The mixture is then allowed to cool to 40°C, air is admitted, and 1 kg of vinyltrimethoxysilane is mixed in under atmospheric pressure. Subsequently 0.5 kg of aminopropyltriethoxysilane and, finally, 0.5 kg of dibutyltin diacetylacetonate are added, and the mixture is stirred until smooth and then degassed again at 100 mbar.

The viscosity of the formulation is 30 Pa·s.

For testing purposes, the resulting coating composition is applied with a coating knife to concrete sample slabs (B 25) in a thickness of 1.5 mm and left to dry for 5 days at 20°C and 60% relative humidity. The characteristic values obtained from the tests are compiled in Table 1.

### Example 2:

20 kg of polyoxypropylene, dimethoxy-methyl-silane-terminated and with a viscosity of 10 Pa·s, and 4 kg of polyoxypropylene, dimethoxy-methyl-silane-terminated and with a viscosity of 20 Pa·s (all values at 20°C and 10 s⁻¹), 10 kg of diisodecyl phthalate, 1 kg of carbon black, 0.5 kg of titanium dioxide and 0.33 kg of bis(2,2,6,6-tetramethyl-4-piperidyl) sebacate are charged to an evacuable mixer and the components are briefly stirred together under atmospheric pressure. Then 35 kg of chalk powder, 90% by mass < 15 µm, are added and the mixture is subjected to shearing until homogeneous.

The batch is cooled to below 50°C, air is admitted, and 1.5 kg of vinyltrimethoxysilane are mixed in under atmospheric pressure. Then 0.6 kg of aminotriethoxy-silane and, finally, 0.6 kg of dibutyltin diacetylacetonate are added, and the mixture is stirred until smooth and briefly degassed again at 50 mbar. The viscosity of the resulting coating composition is 60 Pa·s.

For testing purposes, the material is applied to a glass fibre mat with a thickness of 1.5 mm. The characteristic values reported in Table 1 were obtained after a 5-day drying time at 25°C and 60% relative humidity.

**Table 1:**

| Characteristic value | Example 1 | Example 2 |
|---|---|---|
| Skinning (min) (20°C, 60% rel. humidity) | 15 | 15 |
| | | |
| Adhesive strength (MPa) | 0.7 | 1.1 |
| | | |
| Heat resistance (°C) (to DIN 52123) | 70 | 80 |
| | | |
| Crack bridging (mm) | 7 | 5 |
| | | |
| Water resistance (20°C) | + | + |
| | | |
| Water vapour diffusion coefficient | 4000 | 3500 |
| | | |
| Shore A hardness | 35 | 45 |
| | | |
| Water impermeability (at 0.4 N/mm²) | + | + |

## Claims

1. One-component, water-free coating composition based on MS polymers, **characterized in that** it is composed of a mixture of silane-terminated polyoxyalkylenes of different viscosities of together 20% to 50% by mass, 30% to 70% by mass of chalk powder, 0.5% to 5% by mass of drying agents, 0.1% to 5% by mass of curing catalysts, 0.2% to 5% by mass of adhesion promoter and, if desired, pigments, plasticizers, fillers, light stabilizers and heat stabilizers of together 0% to 20% by mass.

2. One-component, water-free coating composition according to Claim 1, **characterized in that** it comprise as silane-terminated polyoxyalkylenes methoxy-alkyl-silane-terminated polyoxypropylene products having viscosities of 0.1 to 1.0 Pa·s, 5 to 10 Pa·s, 10 to 15 Pa·s and/or 15 to 25 Pa·s (measured at 20°C and a shear rate of 10 s⁻¹).

3. One-component, water-free coating composition according to Claim 1 or 2, **characterized in that** it comprises as silane-terminated polyoxyalkylenes two methoxy-alkyl-silane-terminated polyoxypropylene products having viscosities of 5 to 10 Pa·s and/or 10 to 15 (measured at 20°C and a shear rate of 10 s⁻¹) in a mass ratio of 10:1 to 1:5.

4. One-component, water-free coating composition according to Claims 1 to 3, **characterized in that** it comprises 20% to 70% by mass of chalk powder hydrophobized with stearates.

5. One-component, water-free coating composition, according to Claims 1 to 4, **characterized in that** it comprises as drying agent 0.5% to 5% by mass of vinyltrimethoxysilane.

6. One-component, water-free coating composition according to Claims 1 to 5, **characterized in that** it comprise as curing catalyst 0.1% to 5% by mass of dibutyltin diacetylacetonate.

7. One-component, water-free coating composition, according to Claims 1 to 6, **characterized in that** it comprises as adhesion promoters 0.2% to 5% by mass of aminosilanes, such as aminopropyltrimethoxysilane or aminoethyl-aminopropyltrimethoxysilane.

8. Process for producing a one-component, water-free coating composition for sealing built structures, based on MS polymers, according to Claims 1 to 7, **characterized in that** in a vacuum mixer the liquid, silane-terminated polyoxyalkylenes are introduced together with plasticizer, stabilizers and pigments and then the chalk powder is mixed in with vacuum degassing; then, in succession, drying agents, adhesion promoters and curing catalysts are incorporated individually, after which the mixture is again degassed.

9. Use of the one-component, water-free coating composition such as defined in anyone of claims 1 to 7 for sealing built structures or flat roofs.

## Patentansprüche

1. Einkomponentige, wasserfreie Beschichtungsmasse auf Basis von MS-Polymeren, **dadurch gekennzeichnet, dass** sie besteht aus einem Gemisch von silanterminierten Polyoxyalkylenen unterschiedlicher Viskosität von zusammen 20 bis 50 Massen-%, 30 bis 70 Massen-% Kreidepulver, 0,5 bis 5 Massen-% Trockenmitteln, 0,1 bis 5 Massen-% Härtungskatalysatoren, 0,2 bis 5 Massen-% Haftvermittlern und gegebenenfalls Pigmenten, Weichmachern, Füllstoffen, Licht- und Thermostabilisatoren von zusammen 0 bis 20 Massen-%.

2. Einkomponentige, wasserfreie Beschichtungsmasse nach Anspruch 1, **dadurch gekennzeichnet, dass** sie als silanterminierte Polyoxyalkylene methoxy-alkylsilanterminierte Polyoxypropylentypen mit Viskositäten von 0,1 bis 1,0 Pa•s, 5 bis 10 Pa•s, 10 bis 15 Pa•s bzw. 15 bis 25 Pa•s (gemessen bei 20°C und einem Schergefälle von 10 s⁻¹) enthält.

3. Einkomponentige, wasserfreie Beschichtungsmasse nach Anspruch 1 oder 2, **dadurch gekennzeichnet, dass** sie als silanterminierte Polyoxyalkylene zwei methoxy-alkyl-silanterminierte Polyoxypropylentypen mit Viskositäten von 5 bis 10 Pa•s bzw. 10 bis 15 (gemessen bei 20°C und einem Schergefälle von 10 s⁻¹) im Massenverhältnis von 10 zu 1 bis 1 zu 5 enthält.

4. Einkomponentige, wasserfreie Beschichtungsmasse nach den Ansprüchen 1 bis 3, **dadurch gekennzeichnet, dass** sie 20 bis 70 Massen-% mit Stearaten hydrophobiertes Kreidepulver enthält.

5. Einkomponentige, wasserfreie Beschichtungsmasse nach den Ansprüchen 1 bis 4, **dadurch gekennzeichnet, dass** sie als Trockenmittel 0,5 bis 5 Massen-% Vinyltrimethoxysilan enthält.

6. Einkomponentige, wasserfreie Beschichtungsmasse nach den Ansprüchen 1 bis 5, **dadurch gekennzeichnet, dass** sie als Härtungskatalysator 0,1 bis 5 Massen-% Dibutylzinndiacetylacetonat enthält.

7. Einkomponentige, wasserfreie Beschichtungsmasse nach den Ansprüchen 1 bis 6, **dadurch gekennzeichnet, dass** sie als Haftvermittler 0,2 bis 5 Massen-% Aminosilane, wie z.B. Aminopropyltrimethoxysilan oder Aminoethylaminopropyltrimethoxysilan enthält.

8. Verfahren zur Herstellung einer einkomponentigen, wasserfreien Beschichtungsmasse zur Bauwerksabdichtung auf Basis von MS-Polymeren nach den Ansprüchen 1 bis 7, **dadurch gekennzeichnet, dass** in einem Vakuummischer die flüssigen, silanterminierten Polyoxyalkylene zusammen mit Weichmacher, Stabilisatoren und Pigmenten vorgelegt werden und dann das Kreidepulver unter Vakuumentgasung zugemischt wird; anschließend werden nacheinander Trockenmittel, Haftvermittler und Härtungskatalysatoren einzeln eingearbeitet und danach wird die Mischung nochmals entgast.

9. Verwendung der einkomponentigen, wasserfreien Beschichtungsmasse gemäss einem der Ansprüche 1 bis 7 zur Bauwerks- oder Flachdachabdichtung.

## Revendications

1. Composition de revêtement à composant unique, sans eau, à base de polymères MS, **caractérisée en ce qu'**elle est composée d'un mélange de polyoxyalkylènes à terminaison silane de différentes viscosités qui constituent ensemble de 20 % à 50 % en masse, de 30 % à 70 % en masse de poudre de craie, de 0,5 % à 5 % en masse d'agents de séchage, de 0,1 % à 5 % en masse de catalyseurs de durcissement, de 0,2 % à 5 % en masse d'un promoteur d'adhérence et, si souhaité, des pigments, des plastifiants, des matières de charge, des photostabilisants et des stabilisateurs thermiques qui constituent ensemble de 0 % à 20 % en masse.

2. Composition de revêtement à composant unique, sans eau, selon la revendication 1, **caractérisée en ce qu'**elle comprend comme polyoxyalkylènes à terminaison silane des produits de polyoxypropylène à terminaison méthoxy-alkyl-silane dont les viscosités varient de 0,1 à 1,0 Pa·s, de 5 à 10 Pa·s, de 10 à 15 Pa·s et/ou de 15 à 25 Pa·s (mesurées à 20 °C et à une vitesse de cisaillement de 10 s⁻¹).

3. Composition de revêtement à composant unique, sans eau, selon la revendication 1 ou 2, **caractérisée en ce qu'**elle comprend comme polyoxyalkylènes à terminaison silane deux produits de polyoxypropylène à terminaison méthoxy-alkyl-silane dont les viscosités varient de 5 à 10 Pa·s et/ou de 10 à 15 Pa·s (mesurées à 20 °C et à une vitesse de cisaillement de 10 s⁻¹) dans un rapport de masse de 10:1 à 1:5.

4. Composition de revêtement à composant unique, sans eau, selon les revendications 1 à 3, **caractérisée en ce qu'**elle comprend de 20 % à 70 % en masse d'une poudre de craie rendue hydrophobe avec des stéarates.

5. Composition de revêtement à composant unique, sans eau, selon les revendications 1 à 4, **caractérisée en ce qu'**elle comprend de 0,5 % à 5 % en masse de vinyltriméthoxysilane comme agent de séchage.

6. Composition de revêtement à composant unique, sans eau, selon les revendications 1 à 5, **caractérisée en ce qu'**elle comprend de 0,1 % à 5 % en masse de diacétylacétonate de dibutyl-étain comme catalyseur de durcissement.

7. Composition de revêtement à composant unique, sans eau, selon les revendications 1 à 6, **caractérisée en ce qu'**elle comprend de 0,2 % à 5 % en masse d'aminosilanes, comme l'aminopropyl-triméthoxysilane ou l'aminoéthyl-aminopropyl-triméthoxysilane, comme promoteurs d'adhérence.

8. Procédé pour produire une composition de revêtement à composant unique, sans eau, pour étanchéifier des structures construites, à base de polymères MS, selon les revendications 1 à 7, **caractérisé en ce que**, dans un mélangeur sous vide, les polyoxyalkylènes à terminaison silane liquides sont introduits avec un plastifiant, des stabilisateurs et des pigments, et la poudre de craie est ensuite mélangée avec dégazage sous vide ; ensuite, en succession, des agents de séchage, des promoteurs d'adhérence et des catalyseurs de durcissement sont incorporés individuellement, après quoi le mélange est de nouveau dégazé.

9. Utilisation de la composition de revêtement à composant unique, sans eau, selon l'une quelconque des revendications 1 à 7 pour étanchéifier des structures construites ou des toits plats.
